# EUROPÄISCHE PATENTSCHRIFT

(11) **EP 3 069 804 B1**
(45) Veröffentlichungstag und Bekanntmachung des Hinweises auf die Patenterteilung: **24.04.2019**
(21) Anmeldenummer: 16159398.3
(22) Anmeldetag: 09.03.2016
(51) Int. Cl.: B22F 3/105, B22F 5/10, B33Y 10/00, B33Y 50/02, B23K 26/342, B33Y 30/00, B23K 26/146

(54) **VERFAHREN ZUR ADDITIVEN FERTIGUNG EINES FORMKÖRPERS**
METHOD FOR ADDITIVE PRODUCTION OF A WORKPIECE
PROCÉDÉ DE FABRICATION ADDITIVE D'UNE PIECE

(30) Priorität: 17.03.2015 DE 102015103939
(43) Veröffentlichungstag der Anmeldung: 21.09.2016
(73) Patentinhaber: GEFERTEC GmbH, 12681 Berlin (DE)
(72) Erfinder: Fischer, Georg, 13129 Berlin (DE); Röhrich, Tobias, 03185 Turnow-Preilack (DE); Haschke, Igor, 10437 Berlin (DE)
(74) Vertreter: Kaufmann, Sigfrid

(56) Entgegenhaltungen:
- DE-A1-102007 009 273
- DE-A1-102013 212 620

## Beschreibung

Die Erfindung betrifft ein Verfahren zum Herstellen von, insbesondere metallischen, Formkörpern mittels eines additiven Fertigungsverfahrens, wobei zum Zweck einer Verbesserung der spezifischen Struktur- und Werkstoffeigenschaften des jeweiligen Formkörpers während der Fertigung eine definierte Temperaturführung ermöglicht ist.

Mit additiven Fertigungsverfahren - auch bekannt als 3D-Druck - können, basierend auf vorhandenen CAD-Daten, direkt und zeitsparend Formkörper-Konstruktionen hergestellt werden, die mittels spanender Verfahren nicht oder nur unter hohem technischen und zeitlichem Aufwand herstellbar sind.

Als additive Fertigungsverfahren zur Herstellung metallischer Formkörper sind beispielsweise das selektive Lasersintern (SLS), das selektive Laserschmelzen (SLM) oder das Laserauftragschweißen mit Draht bzw. Band bekannt. Bei allen diesen Verfahren wird der Formkörper schichtweise aufgebaut. Hierzu wird ein metallisches Pulver bzw. ein metallischer Draht mittels eines Energiestrahls, z. B. eines Lasers, (lokal) aufgeschmolzen. Das schmelzflüssige Metall verbindet sich sodann beim Erstarren mit dem bereits fertiggestellten Teil des Formkörpers. Dieser Vorgang ist stets mit einem unerwünschten Wärmeeintrag in den Formkörper verbunden.

Außerdem kann die Erstarrung des schmelzflüssigen Metalls nur in begrenztem Maße kontrolliert werden. Aufgrund der hohen Aufschmelz- und Erstarrungstemperaturen wird das Gefüge des Werkstoffes darüber hinaus signifikant verändert. So ist z. B. das Auftreten von Eigenspannungen bekannt, die sich in einem Verziehen des Formkörpers manifestieren können.

Die Gefügeeigenschaften und die Eigenspannungszustände werden dabei, neben den Eigenschaften des Werkstoffes, maßgeblich von der zum Aufschmelzen eingebrachten Wärmemenge und -verteilung und dem Abtransport dieser Wärmemenge durch thermische Leitung aus dem Formkörper beeinflusst.

Wird der Wärmeabtransport aus dem lokal aufgeschmolzenen Bereich während der Fertigung nicht oder nur wenig berücksichtigt, so resultiert dies zum einen in erheblichen Einschränkungen in Bezug auf die erreichbaren Fertigungsqualitäten und zum anderen in notwendigen Nacharbeiten, wie insbesondere einer thermischen Nachbehandlung in Form von z. B. Normalisieren oder Spannungsarmglühen.

Weiterhin stellt im Bereich der additiv-generativen Fertigungsverfahren die Abkühlgeschwindigkeit bei der Herstellung metallischer Bauteile den limitierenden Faktor in Bezug auf die maximale Aufbaurate dar, da in der Regel mit zunehmender Aufbauhöhe die Wärmeableitung deutlich verschlechtert wird.

In der DE 101 08 612 C1 wird vorgeschlagen, die Ummantelung des Bauraums, in welchem der Formkörper mittels additivem Verfahrens hergestellt wird, derart zu beheizen, dass sich eine Temperaturverteilung in der Ummantelung einstellt, die ausgehend von den an die zuletzt gesinterte Oberfläche des Schichtkuchens angrenzenden Bereichen der Ummantelung in Richtung auf den Bauraumboden hin abnimmt. Dadurch wird die Temperierung der einzelnen Schichten zwar vergleichmäßigt, der Wärmeabtransport wird jedoch nicht gefördert.

Ein Verfahren und eine Vorrichtung der Rapid-Technologie zur Herstellung eines dreidimensionalen Gegenstandes aus einem verfestigbaren Material, wobei nach Fertigstellung des Gegenstandes innerhalb des Bauraums eine zusätzliche Kühlung erfolgt, ist in DE 10 2007 057 450 A1 beschrieben. Nachteilig ist jedoch, dass die Abkühlung des Gegenstandes zum Zwecke einer Verbesserung der Gefügestruktur erst im Anschluss an den Herstellungsprozess erfolgt.

Aus DE 10 2007 009 273 A1 ist ein Verfahren zur Herstellung eines dreidimensionalen Gegenstandes durch additives Auftragen und Verfestigen eines ausgewählten Teils einer pulverförmigen Materialschicht, entsprechend einem Querschnitt des herzustellenden Gegenstandes, mittels Bestrahlens mit einem Energie- oder Materialstrahl unter Erwärmung der bestrahlten Teile und deren Umgebung, bekannt, wobei der während des wiederholten Auftragens und Bestrahlens aus einer Mehrzahl von Schichten gebildete Schichtkuchen zusätzlich, zumindest teilweise, von einem Fluid durchströmt wird, sodass die verfestigten Teile der Schichten während des Herstellungsprozesses permanent von dem durch die pulverförmigen Bereiche der Schichten strömenden Fluid temperiert, insbesondere gekühlt, werden.

Nachteilig bei diesem Verfahren ist, dass die abführbare Wärmemenge stark von der Porosität der pulverförmigen Anteile des Schichtkuchens abhängt. Insbesondere kann nur ein kleiner Fluidmassestrom, entsprechend der im Schichtkuchen gebildeten Perkolationspfade, zur Wärmeabfuhr genutzt werden, wobei Flüssigkeiten, die im Vergleich zu Gasen eine größere Wärmemenge pro Zeiteinheit abführen können, in diesem Fall aber als Kühlfluid aufgrund ihrer Wechselwirkung mit dem Schichtkuchen weniger geeignet sind.

DE 10 2013 212 620 A1 beschreibt ein Verfahren und eine Vorrichtung zur additiven Fertigung mittels SLS, wobei gleichzeitig mit dem herzustellenden Bauteil eine zusätzliche Prozessbeeinflussungseinrichtung, die beispielsweise eine Kühlvorrichtung sein kann, gedruckt wird. Diese, zusammen mit dem Bauteil um das selbige herum aufgebaute Prozessbeeinflussungseinrichtung wird noch während des Druckvorganges in Betrieb genommen. Allerdings wird die Prozessbeeinflussungseinrichtung nach der Fertigstellung des Bauteiles nicht mehr benötigt und muss entfernt werden.

Aufgabe der Erfindung ist es, ein Verfahren zur additiv-generativen Fertigung eines Formkörpers zur Verfügung zu stellen, bei dem die Temperaturführung in dem schichtweise aufzubauenden Formkörper in einem weiten Temperaturbereich definiert gesteuert werden kann, sodass ein derartig gefertigter Formkörper mit hoher Maßhaltigkeit reproduzierbar und ohne thermische Nachbehandlung hergestellt werden kann.

Die Lösung dieser Aufgabe erfolgt durch ein Verfahren zur Herstellung eines Formkörpers gemäß dem Anspruch 1. Zweckmäßige Weiterbildungen der Erfindung sind Gegenstand der Unteransprüche.

Erfindungsgemäß wird ein Verfahren bereitgestellt zur Herstellung eines Formkörpers, insbesondere eines metallischen Formkörpers, der in einem additiven Fertigungsverfahren unter Verwendung eines Energiestrahles, beispielsweise eines Lasers, schichtweise aufgebaut wird, wobei während der Herstellung vermittels eines Wärmeübertragungsfluids eine Temperierung der bereits fertig gestellten Teile des Formkörpers erfolgt.

Dieses generative Fertigungsverfahren kann Lasersintern (SLS - selektives LaserSintern), Laserschmelzen (SLM - selective Laser-Melting) oder Laserauftragschweißen sein, wobei das schichtweise Aufbauen nicht auf die genannten Verfahren eingeschränkt ist.

Beim selektiven Lasersintern werden räumliche Strukturen aus einem pulverförmigen (hier: metallische Partikel enthaltenden) Ausgangsmaterial durch ortsselektives Sintern mittels Laserlichts hergestellt, wobei die herzustellende Struktur Schicht für Schicht aufgebaut wird. Die Metallpartikel werden hierbei nur teilweise aufgeschmolzen; die fertige Struktur wird anschließend noch einer Temperaturbehandlung unterzogen. Das pulverförmige Ausgangsmaterial kann z. B. Chromnickelstahl-, Titan-, Kupfer- oder Aluminiumpartikel enthalten.

Das selektive Laserschmelzen funktioniert ähnlich dem selektiven Lasersintern, wobei hier metallisches Pulver (d. h. reines Metall in pulveriger Form) anstelle der pulverförmigen Mischung aus Metallpartikeln und Binder verwendet wird. Eine vorher aufgebrachte Schicht aus dem Metallpulver wird lokal durch den Laser aufgeschmolzen, wodurch beim Erkalten ein (kleiner, d. h. der Größe des Laserbrennflecks entsprechender) Metallbereich ausgebildet wird. Der Vorteil des Laserschmelzens gegenüber 3D-Druck-Verfahren, die ein Sintern erfordern, ist die hohe strukturelle Dichte der gedruckten Metallstrukturen, wobei der mit dem Sintern zwangsläufig verbundene Volumenschwund bei dem Laserschmelzverfahren wegfällt.

Beim Laserauftragschweißen werden dreidimensionale Strukturen mittels Aufschmelzen und gleichzeitigem Aufbringen eines nahezu beliebigen Materials schichtweise zu einer dreidimensionalen Struktur aufgebaut. Das aufzubringende Material kann in Form eines Pulvers z. B. als Metallpulver, oder auch in Form eines Schweißdrahtes bzw. -bandes geschehen, von dessen Endbereich Metall abgeschmolzen wird.

Gemäß der Erfindung erfolgt der schichtweise Aufbau des Formkörpers in einem abgeschlossenen Bauraum, d. h., der Bauraum ist gegen die Umgebung abgedichtet, in welchem eine Schutzgasatmosphäre herrscht.

Der Formkörper wird auf einer Druckplattform aufgebaut, wobei vorgesehen sein kann, dass die Druckplattform nach Fertigstellung jeweils einer Schicht um die Höhe dieser Schicht in vertikaler Richtung nach unten bewegt wird. Es kann auch vorgesehen sein, dass die Bearbeitungseinheit und der dafür verwendete Energiestrahl entsprechend des schichtweisen Wachsens des Formkörpers in die Höhe nachgeführt wird, während die Druckplattform unbewegt bleibt.

Erfindungsgemäß ist vorgesehen, dass diese Druckplattform Fluidkanäle aufweist. Die Druckplattform kann ein zusammenhängendes Kanalsystem aufweisen, durch welches, insbesondere zu Beginn des Herstellungsverfahrens, ein Wärmeübertragungsfluid durchgeleitet wird. So kann z. B. der beim Aufbau der ersten Schichten erfolgende Wärmeeintrag effektiv durch Kühlung der Druckplattform vermittels eines als Kühlmittel wirkenden Wärmeübertragungsfluids abgeführt werden.

Weiterhin weist die Druckplattform auf ihrer Deckfläche, auf welcher der Formkörper aufgebaut wird, eine Vielzahl von einzeln verschließbaren Wärmeübertragungsfluid-Austrittsöffnungen auf.

Der Aufbau des Formkörpers erfolgt in der Art, dass in Wandungen desselben Fluidkanäle "eingearbeitet" werden, d. h., die Wandungen des Formkörpers werden nicht massiv gebaut, sondern mit einem in die Wandung integrierten Kanalsystem versehen.

Hierbei werden Fluideintrittsöffnungen derart an der die Druckplattform kontaktierenden Unterseite der Bodenplatte des Formkörpers bzw. den die Druckplattform kontaktierenden Wandungen positioniert, dass sie mit Wärmeübertragungsfluid-Austrittsöffnungen der Druckplattform überlappen, sodass das Wärmeübertragungsfluid über die Druckplattform in die Bodenplatte bzw. die Wandungen des Formkörpers eingeleitet wird.

Beispielsweise werden die CAD-Daten des herzustellenden Formkörpers vor dessen Aufbau derart modifiziert, dass die Wandungen (zumindest bereichsweise) und ggf. die Bodenplatte ein Kanalsystem und Fluideintrittsöffnungen aufweisen. Vorzugsweise wird das in die Wandung integrierte Kanalsystem derart gestaltet, dass es nach Fertigstellung des Formkörpers äußerlich vorzugsweise unsichtbar bleibt.

Noch während der Fertigung des Formkörpers ist vorgesehen, ein Wärmeübertragungsfluid durch die bereits fertiggestellten Kanäle zu leiten, sodass die beim Schichtaufbau eingebrachte Wärme in unmittelbarer Nähe ihres Entstehungsortes von dem Wärmeübertragungsfluid abtransportiert wird.

Unter dem nachfolgend verwendeten Begriff "Fertigungsebene" ist diejenige Schicht des im (schichtweisen) Aufbau befindlichen Formkörpers zu verstehen, die gerade bearbeitet bzw. aufgebaut wird, d. h. in die unmittelbar der Wärmeeintrag durch den Energiestrahl erfolgt.

Über ein Kühl-/Heizsystem wird die Temperatur des Wärmeübertragungsfluids geregelt, wodurch eine definierte Abkühlrate der Fertigungsebene des Formkörpers eingestellt werden kann. Hierbei kann also ein aktives Kühlen des Formkörpers aber auch ein aktives Heizen vorgesehen sein.

Die in die Wandungen integrierten Fluidkanäle können sowohl in einer Ebene parallel zur Fertigungsebene des Schichtaufbaus als auch senkrecht oder in einem Winkel zu ihr verlaufen.

Erfindungsgemäß ist das Wärmeübertragungsfluid eine Flüssigkeit mit einer im Vergleich zu Luft oder Gasen deutlich höheren Wärmekapazität und Wärmeleitfähigkeit, wobei die Flüssigkeit vorzugsweise wenig korrosiv und schwer entzündlich ist. Es kann jedoch auch vorgesehen sein, ein Gas als Wärmeübertragungsfluid einzusetzen.

Weiterhin ist vorgesehen, das Wärmeübertragungsfluid vermittels geeigneter Reinigungsvorrichtungen nach einem Durchlauf durch das bzw. die Kanalsysteme zu reinigen und anschließend erneut für die Temperierung zu verwenden.

Der Vorteil des erfindungsgemäßen Verfahrens zum schichtweisen Aufbau eines Formkörpers besteht darin, dass vermittels des während der Herstellung durch die Wandungen des Formkörpers strömenden Wärmeübertragungsfluids die Temperatur der bereits fertiggestellten Teile des Formkörpers definiert eingestellt werden kann.

Dadurch ist es ermöglicht, die Erwärmung bzw. Abkühlung des Formkörpers während seines schichtweisen Aufbaus immer im werkstoffspezifisch optimalen Bereich zu halten. Durch diese für die Herstellung bestmögliche Wärmeführung ist eine gegenüber dem Stand der Technik deutlich erhöhte Prozessgeschwindigkeit erreichbar, da ein Wärmestau vermieden und dadurch die Schichtauftragsraten ohne Verschlechterung der spezifischen Werkstoffeigenschaften deutlich erhöht werden können.

Die Erfindung kann weiter derart ausgebildet sein, den Bauraum, in welchem der Formkörper hergestellt wird, mit Wärmeübertragungsfluid teilweise oder vollständig zu fluten.

Bei Verwendung eines flüssigen Wärmeübertragungsfluids kann vorgesehen sein, den Bauraum nur teilweise zu fluten, indem der Bauraum vorzugsweise nur maximal bis zur Höhe der Fertigungsebene geflutet wird, sodass das Wärmeübertragungsfluid den bereits aufgebauten Teil des Formkörpers zumindest teilweise umschließt. Gemäß einer Ausgestaltungsvariante wird der Flüssigkeitsstand auf wenige Millimeter unterhalb der Fertigungsebene, d. h. der Oberkante des bereits aufgebauten Formkörperteils, eingestellt, wobei er jedoch mindestens 50% der Höhe des bereits aufgebauten Formkörperteils beträgt.

Indem die bereits fertiggestellten Teile des Formkörpers von einem flüssigen Wärmeübertragungsfluid umschlossen sind, sind diese Bereiche zudem äußerlich, z. B. vor anhaftenden Spritzern, geschützt, was den erforderlichen Nachbearbeitungsaufwand erheblich minimieren kann.

Außerdem kann das den Formkörper umschließende, d. h. seine gesamte Oberfläche abdeckende, Wärmeübertragungsfluid als Oxidationsschutz wirken. Dies ist insbesondere dann der Fall, wenn z. B. eine korrosionsverhütende Flüssigkeit oder ein Schutzgas als Wärmeübertragungsfluid verwendet wird, das den Bauraum vollständig ausfüllt.

Gemäß einer weiteren Ausführungsform wird der Flüssigkeitspegel des (flüssigen) Wärmeübertragungsfluids im Bauraum nicht nur der Fertigungsebene nachgeführt, sondern kann, beispielsweise kurzzeitig, über die Fertigungsebene hinaus angehoben und anschließend wieder unter die Fertigungsebene abgesenkt werden.

Dies ist insbesondere dann von Vorteil, wenn neben dem additiven Aufbau auch spanende Prozessschritte während des Herstellungsprozesses des Formkörpers vorgesehen sind, sodass das flüssige Wärmeübertragungsfluid auch als Kühl- und Schmiermittel für das Zerspanungswerkzeug eingesetzt werden kann.

Dementsprechend kann vorgesehen sein, beispielsweise mittels einer Gebläseeinrichtung, die bei Absenken des Flüssigkeitspegels aus dem Wärmeübertragungsfluid auftauchenden Bereiche des Formkörpers aktiv zu trocknen.

Es kann vorgesehen sein, dass der Formkörper während seines Herstellungsprozesses bezüglich seiner Temperatur und/oder einer Änderung seiner Temperatur überwacht wird. Hierzu kann ein mit einer Wärmebildkamera aufgenommenes Wärmebild in Echtzeit hinsichtlich einer Temperaturverteilung auf der Oberfläche des Formkörpers bzw. eine Abfolge von Bildern hinsichtlich einer zeitlichen Änderung der Temperaturverteilung ausgewertet werden.

Durch die kontinuierliche Überwachung der Temperatur ist es möglich, auf unerwünschte Änderungen der Temperatur des Formkörpers, insbesondere in der Nähe der Fertigungsebene, instantan durch eine entsprechende Nachregelung der Wärmeübertragungsfluid-Temperatur zu reagieren.

Weiterhin kann vorgesehen sein, die Temperatur in einzelnen Bereichen des Formkörpers unterschiedlich einzustellen. Beispielsweise kann in Aufbaurichtung, d. h. von unten nach oben, ein konstanter räumlicher Temperaturgradient ausgebildet sein, wobei die Temperatur in der Nähe der Druckplattform geringer ist als im Bereich der Fertigungsebene.

Insbesondere können in die Wandung des Formkörpers eine Mehrzahl von untereinander getrennten Kanalsystemen integriert werden, wobei durch jedes Kanalsystem ein Wärmeübertragungsfluid mit einer für das jeweilige Kanalsystem spezifischen Temperatur geleitet wird.

Gemäß einer weiteren Ausführungsform kann die Temperatur des Formkörpers bzw. des Wärmeübertragungsfluids zeitlich variiert werden, d. h., es wird ein zeitlicher Temperaturgradient vorgegeben.

Es ist auch möglich, zeitlichen und räumlichen Temperaturgradienten zu kombinieren, wobei z. B. für die Fertigungsebene eine zeitlich konstante Temperatur vorgegeben wird, während die Temperatur der Bodenplatte des aufzubauenden Formkörpers (bzw. der Druckplattform) mit zunehmender Bauhöhe absinkt.

Gemäß einer Ausgestaltung der Erfindung kann eine aktive Kühlung der Druckplattform bzw. der Bodenplatte des Formkörpers vermittels in die Druckplattform integrierter Peltierelemente erfolgen. Diese Peltierelemente können unterstützend zu einer Kühlung mittels die Druckplattform durchfließendem Wärmeübertragungsfluids oder alleinig für eine Wärmeabfuhr aus der Druckplattform bzw. der Bodenplatte des Formkörpers eingesetzt werden.

## Patentansprüche

1. Verfahren zur additiven Fertigung eines Formkörpers durch Aufschmelzen und Abscheiden von mindestens einem Ausgangsmaterial in einzelnen aufeinanderfolgenden Schichten auf einer Druckplattform unter Verwendung eines Energiestrahls, wobei während der Fertigung eine Temperierung von bereits fertiggestellten Schichten erfolgt, **dadurch gekennzeichnet, dass**
- in Wandungen des Formkörpers integrierte Fluidkanäle hergestellt werden, die in Fluideintrittsöffnungen auf einer die Druckplattform kontaktierenden Seitenwand oder Bodenplatte des Formkörpers münden, indem CAD-Daten des herzustellenden Formkörpers vor dessen Aufbau derart modifiziert werden, dass die Wandungen zumindest bereichsweise und/oder die Bodenplatte ein Kanalsystem und Fluideintrittsöffnungen aufweisen.
- wobei die Fluidkanäle während der additiven Fertigung des Formkörpers von einem temperierten Wärmeübertragungsfluid durchströmt werden, welches über in die Druckplattform eingebrachte Wärmeübertragungsfluid-Austrittsöffnungen von der Druckplattform über die Fluideintrittsöffnungen in die Bodenplatte und/oder die Wandungen des Formkörpers einströmt.

2. Verfahren nach Anspruch 1, **dadurch gekennzeichnet, dass** der Formkörper mittels selektiven Laserschmelzens (SLM) aus einem oder mehreren metallischen Pulvern hergestellt wird.

3. Verfahren nach Anspruch 1, **dadurch gekennzeichnet, dass** der Formkörper mittels Laserauftragschweißen aus mindestens einem drahtförmigen Werkstoff oder mindestens einem metallischen Pulver hergestellt wird.

4. Verfahren nach Anspruch 1, **dadurch gekennzeichnet, dass** der Formkörper mittels Plasmapulverauftragschweißen aus einem oder mehreren metallischen Pulvern hergestellt wird.

5. Verfahren nach Anspruch 1, **dadurch gekennzeichnet, dass** der Formkörper mittels eines Lichtbogenprozesses aus mindestens einem drahtförmigen Werkstoff hergestellt wird.

6. Verfahren nach einem der vorstehenden Ansprüche, **dadurch gekennzeichnet, dass** eine Druckplattform, aufweisend ein zusammenhängendes Kanalsystem von in die Druckplattform integrierter Druckplattformfluidkanäle, verwendet wird, wobei während der Fertigung ein temperiertes Wärmeübertragungsfluid durch die Druckplattformfluidkanäle geleitet wird.

7. Verfahren nach einem der vorstehenden Ansprüche, **dadurch gekennzeichnet, dass** für die Temperierung eine korrosionsverhütende Flüssigkeit als Wärmeübertragungsfluid verwendet wird.

8. Verfahren nach einem der vorstehenden Ansprüche, **dadurch gekennzeichnet, dass** in die Wandungen des Formkörpers mehrere, voneinander getrennte Fluidkanalsysteme integriert werden, wobei jedes Fluidkanalsystem von einem Wärmeübertragungsfluid mit einer für das jeweilige Fluidkanalsystem vorgegebenen Temperatur durchströmt wird.

9. Verfahren nach einem der vorstehenden Ansprüche, **dadurch gekennzeichnet, dass** die fertiggestellten Schichten des Formkörpers zumindest zum Teil von einem temperierten Wärmeübertragungsfluid umströmt werden.

10. Verfahren nach einem der vorstehenden Ansprüche, **dadurch gekennzeichnet, dass** die Temperatur und/oder die Durchflussmenge des temperierten Wärmeübertragungsfluids während des Aufbaus des Formkörpers variiert wird, wobei das Wärmeübertragungsfluid von einem regelbaren Heiz-Kühlsystem gekühlt oder erwärmt wird.

11. Verfahren nach einem der vorstehenden Ansprüche, **dadurch gekennzeichnet, dass** die Temperatur des Formkörpers kontinuierlich während seiner Herstellung ortsaufgelöst gemessen wird.

## Claims

1. Method for additive production of a workpiece through melting and depositing of at least one starting material in individual successive layers on a printing platform using a beam of energy, wherein the temperature of already finished layers is controlled during production, **characterised in that**
- fluid channels, integrated into walls of the workpiece, are manufactured, said fluid channels leading into fluid inlet openings on a side wall or baseplate of the workpiece that is in contact with the printing platform, through modification of CAD data of the workpiece to be manufactured, before it is built up, such that the walls at least in certain areas and/or the baseplate have a channel system and fluid inlet openings;
- wherein the fluid channels, during the additive production of the workpiece, have flowing through them a temperature-controlled heat transfer fluid, which flows in, via heat transfer fluid outlet openings introduced into the printing platform, from the printing platform, via the fluid inlet openings, into the baseplate and/or the walls of the workpiece.

2. Method according to claim 1, **characterised in that** the workpiece is manufactured from one or more metallic powders by means of selective laser melting (SLM).

3. Method according to claim 1, **characterised in that** the workpiece is manufactured from at least one material in the form of wire or at least one metallic powder by means of laser deposition.

4. Method according to claim 1, **characterised in that** the workpiece is manufactured from one or more metallic powders by means of plasma powder transferred arc welding.

5. Method according to claim 1, **characterised in that** the workpiece is manufactured from at least one material in the form of wire by means of an arc process.

6. Method according to any one of the preceding claims, **characterised in that** a printing platform, having a coherent channel system of printing platform fluid channels integrated into the printing platform, is used, wherein a temperature-controlled heat transfer fluid is passed through the printing platform fluid channels during production.

7. Method according to any one of the preceding claims, **characterised in that** an anti-corrosion fluid is used as heat transfer fluid for the temperature control.

8. Method according to any one of the preceding claims, **characterised in that** multiple fluid channel systems, separate from each other, are integrated into the walls of the workpiece, wherein each fluid channel system has flowing through it a heat transfer fluid at a temperature that is predetermined for the respective fluid channel system.

9. Method according to any one of the preceding claims, **characterised in that** the finished layers of the workpiece have flowing around them, at least in part, a temperature-controlled heat transfer fluid.

10. Method according to any one of the preceding claims, **characterised in that** the temperature and/or the volumetric flow of the temperature-controlled heat transfer fluid is varied during the building-up of the workpiece, wherein the heat transfer fluid is cooled or heated by a controllable heating/cooling system.

11. Method according to any one of the preceding claims, **characterised in that** the temperature of the workpiece is measured continuously with local resolution during its manufacture.

## Revendications

1. Procédé de fabrication additive d'un corps formé par fusion et dépôt d'au moins une matière première en couches successives individuelles sur une plateforme d'impression en utilisant un faisceau d'énergie,
dans lequel une thermorégulation de couches déjà fabriquées s'effectue pendant la fabrication,
**caractérisé en ce que**
- des canaux de fluide intégrés dans des parois du corps formé qui débouchent dans des orifices d'entrée de fluide sur une paroi latérale ou une plaque de fond en contact avec la plateforme d'impression du corps formé sont fabriqués, en modifiant des données CAO du corps formé à fabriquer avant la construction de celui-ci de telle sorte que les parois, au moins par endroits, et/ou la plaque de fond comportent un système de canaux et des orifices d'entrée de fluide,
- dans lequel pendant la fabrication additive du corps formé, les canaux de fluide sont parcourus par un fluide caloporteur à température régulée qui, par l'intermédiaire d'orifices de sortie de fluide caloporteur pratiqués dans la plateforme d'impression, afflue de la plateforme d'impression à la plaque de fond et/ou aux parois du corps formé via les orifices d'entrée de fluide.

2. Procédé selon la revendication 1, **caractérisé en ce que** le corps formé est fabriqué au moyen d'une fusion sélective par laser (SLM) à partir d'une ou plusieurs poudres métalliques.

3. Procédé selon la revendication 1, **caractérisé en ce que** le corps formé est fabriqué au moyen d'un soudage à superposition au laser à partir d'au moins un matériau sous forme de fil ou d'au moins une poudre métallique.

4. Procédé selon la revendication 1, **caractérisé en ce que** le corps formé est fabriqué au moyen d'un soudage à superposition au plasma en poudre à partir d'une ou plusieurs poudres métalliques.

5. Procédé selon la revendication 1, **caractérisé en ce que** le corps formé est fabriqué au moyen d'un processus à l'arc électrique à partir d'au moins un matériau sous forme de fil.

6. Procédé selon l'une quelconque des revendications précédentes, **caractérisé en ce qu'**une plateforme d'impression est utilisée, qui comporte un système de canaux cohérent de canaux de fluide de plateforme d'impression intégrés dans la plateforme d'impression, un fluide caloporteur à température régulée étant conduit à travers les canaux de fluide de plateforme d'impression pendant la fabrication.

7. Procédé selon l'une quelconque des revendications précédentes, **caractérisé en ce qu'**un liquide non corrosif est utilisé comme fluide caloporteur pour la régulation de température.

8. Procédé selon l'une quelconque des revendications précédentes, caractérisé en ce dans les parois du corps formé sont intégrés plusieurs systèmes de canaux de fluide séparés les uns des autres, chaque système de canaux de fluide étant parcouru par un fluide caloporteur avec une température prescrite pour le système de canaux de fluide respectif.

9. Procédé selon l'une quelconque des revendications précédentes, **caractérisé en ce que** les couches fabriquées du corps formé sont enveloppées au moins en partie d'un fluide caloporteur à température régulée.

10. Procédé selon l'une quelconque des revendications précédentes, caractérisé en ce la température et/ou le débit du fluide caloporteur sont modifiés à température régulée pendant la construction du corps formé, le fluide caloporteur étant refroidi ou chauffé par un système de chauffage-refroidissement réglable.

11. Procédé selon l'une quelconque des revendications précédentes, caractérisé en ce la température du corps formé est mesurée pendant sa fabrication de manière continue et localisée.
